# EUROPÄISCHE PATENTSCHRIFT

(11) **EP 0 593 933 B1**
(45) Veröffentlichungstag und Bekanntmachung des Hinweises auf die Patenterteilung: **27.08.1997**
(21) Anmeldenummer: 93115403.3
(22) Anmeldetag: 24.09.1993
(51) Int. Cl.: G01P 13/02, G01D 5/14

(54) **Vorrichtung zum Erfassen der Bewegung eines bewegbaren Teils**
Device for detecting the movement of a movable part
Dispositif de détection de mouvement d'une pièce mobile

(30) Priorität: 13.03.1993 DE 4308031; 21.10.1992 DE 4235471
(43) Veröffentlichungstag der Anmeldung: 27.04.1994
(73) Patentinhaber: ROBERT BOSCH GMBH, 70442 Stuttgart (DE)
(72) Erfinder: Aab, Volker, D-77880 Obersasbach (DE)

(56) Entgegenhaltungen:
- EP-A- 0 473 068
- DE-A- 3 834 591
- DE-B- 2 824 697
- DE-U- 9 012 217
- US-A- 4 785 242
- U.TIETZE, CH.SCHENK 'HALBLEITER-SCHALTUNGSTECHNIK' 1980 , SPRINGER-VERLAG , BERLIN HEIDELBERG NEW YORK SEITEN 54 UND 112.

## Beschreibung

Die Erfindung geht aus von einer Vorrichtung zum Erfassen der Bewegung eines bewegbaren Teils nach der Gattung des Hauptanspruchs. Aus Firmenunterlagen von PHILIPS, Philips Semiconductors, KMI 10/1-Integrated Rotational Speed Sensor, SC 17, Sept. 1992, ist ein Sensor bekannt, der die Drehzahl eines rotierenden Teils erfaßt. Als Sensorelement wird ein Hall-Sensor eingesetzt, dessen Ausgangssignal einer signalverarbeitenden Anordnung zugeleitet wird. Die signalverarbeitende Anordnung enthält ein Filter zum Unterdrücken von elektromagnetischen Störsignalen, einen Verstärker sowie einen Schmitt-Trigger. Das Ausgangssignal des Schmitt-Triggers schaltet eine Stromquelle, die einen definierten Strom zwischen zwei Stromversorgungsanschlüssen zuläßt. Eine weitere Stromquelle ist in der Energieversorgungsschaltung des Sensors enthalten. Die weitere Stromquelle hält den für die Energieversorgung des Sensors benötigten Strom auf einem konstanten Wert. Eine nicht näher schriebene Auswerteanordnung wertet den auf einer der beiden versorgungsleitungen fließenden Strom aus. Die von der geschalteten Stromquelle eingeprägte Stromänderung auf einer der Stromversorgungsleitungen wird in der Auswerteanordnung in ein Drehzahlsignal umgesetzt.

Aus der DE-U 90 12 217.8 ist eine Anordnung bekannt, die einen elektromotorischen Antrieb zum Öffnen und Schließen von Fenstern eines Kraftfahrzeugs enthält. Ein zentrales Gerät, das Steuer- und Auswerteanordnungen aufweist, ist mit mehreren Antriebseinheiten verbunden, die in den Türen des Kraftfahrzeugs angeordnet sind. Die Antriebseinheiten enthalten einen Elektromotor sowie eine Sensoranordnung. Die Sensoranordnung erfaßt eine Drehzahl des Antriebs. Zwischen dem zentralen Gerät und jeder Antriebseinheit sind fünf Verbindungsleitungen zur Signalübertragung und Energieübertragung vorgesehen.

Der Erfindung liegt die Aufgabe zugrunde, den Verkabelungsaufwand einer Vorrichtung zum Erfassen der Bewegung eines bewegbaren Teils, mit einem ersten Teil, das eine Sensoranordnung enthält, und mit einem vom ersten Teil abgesetzten zweiten Teil, das eine Auswerteanordnung enthält, zu vereinfachen.

Die Aufgabe wird durch die im unabhängigen Patentanspruch angegebenen Merkmale gelöst.

### Vorteile der Erfindung

Die erfindungsgemäße Vorrichtung weist den Vorteil auf, daß zur Signalübertragung zwischen einer Sensoranordnung, die ein Richtungs- und ein Geschwindigkeitssignal abgibt, und einer Auswerteanordnung lediglich eine Signalleitung erforderlich ist. Eine in der Sensoranordnung enthaltene signalverarbeitende Anordnung ermittelt aus den von wenigstens zwei Lagesensoren abgegebenen Signalen ein Richtungs- und ein Geschwindigkeitssignal, denen jeweils diskrete Werte zugeordnet werden. Die Zuweisung von diskreten Werten ermöglicht eine einfache Signalaufbereitung in der Sensoranordnung mittels geschalteter Strom- oder geschalteter Spannungsquellen. Die addierten Werte werden über die Signalleitung übertragen. Die Signalübertragung von der Sensoranordnung zur Auswerteanordnung ist somit auf minimal drei diskrete Signalpegel festgelegt. Mit dieser Maßnahme ist eine hohe Festigkeit gegenüber Störsignalen erreichbar. Diese Signalübertragung ist insbesondere für eine digitale Weiterverarbeitung des Signals, beispielsweise mit Komparatoren, vorteilhaft.

Vorteilhafte Weiterbildungen und Ausgestaltungen der erfindungsgemäßen Vorrichtung ergeben sich aus abhängigen Patentansprüchen.

In einer ersten vorteilhaften Ausgestaltung sind dem Richtungs- und dem Geschwindigkeitssignal wenigstens näherungsweise gleiche Werte zugeordnet. Unter Einbeziehung der Addition der beiden Werte ergeben sich drei unterschiedliche Signalpegel, die über die Signalleitung übertragen werden. Bei einem gegebenen maximalen Spannungspegel oder bei einem vorgegebenen maximalen Strom ist mit dieser Maßnahme das beste Verhältnis von Nutzsignalen zu Störsignalen erhältlich.

In einer anderen vorteilhaften Ausgestaltung ist vorgesehen, daß dem Richtungs- und dem Geschwindigkeitssignal jeweils unterschiedliche Werte zugeordnet werden. Vorzugsweise wird dem einen Signal der doppelte Wert des anderen Signals zugeordnet. Mit dieser Maßnahme ist in der Auswerteanordnung eine einfache Ermittlung der Richtungs- und der Geschwindigkeitsinformation möglich. Über die Signalleitung werden in dieser Ausgestaltung vier unterschiedliche Signalpegel übertragen.

In einer vorteilhaften Ausgestaltung sind die Lagesensoren als magnetfeldempfindliche Elemente ausgebildet. Besonders geeignet sind Halleffekt-Elemente, die preisgünstig erhältlich sind und die eine große Betriebssicherheit aufweisen.

Die Signalübertragung zwischen der Sensoranordnung und der Auswerteanordnung ist mit einem eingeprägten Spannungs- oder einem eingeprägten Stromsignal durchführbar. Die Einprägung des Stromsignals, vorzugsweise mittels zweier geschalteter Stromquellen, weist den Vorteil auf, daß eingekoppelte Störspannungen oder beispielsweise unterschiedliche Bezugspotentiale zwischen Auswerte- und Sensoranordnung auf die Übertragung keinen Einfluß haben.

Eine Weiterbildung der Signalübertragung mit eingeprägtem Strom sieht den Einsatz einer Stromspiegelschaltung in der Auswerteanordnung vor. Die Stromspiegelschaltung ermöglicht ein präzises Umsetzen des Stromsignals in ein Spannungssignal, das für die weitere Auswertung einfacher handhabbar ist als ein Stromsignal.

Eine andere Weiterbildung betrifft die Energieversorgung der Sensoranordnung und, sofern erforderlich, die der Lagesensoren. Die Weiterbildung sieht eine Einbeziehung der Verkabelung eines Elektromotors vor, der das bewegbare Teil antreibt.

Gemäß einer ersten Ausführung der Weiterbildung ist die Energieversorgung der Sensoranordnung über die Signalleitung sowie über wenigstens eine der zum Elektromotor führenden Leitungen vorgesehen. Der auf der Signalleitung fließende Strom setzt sich in dieser Ausführung zusammen aus dem Strom für die Energieversorgung der Sensoranordnung und aus dem für die Signalübertragung vorgegebenen Strom. Der Vorteil dieser ersten Ausführung liegt darin, daß bei einem vorgegebenen Kurzschluß des Elektromotors, den eine für die Steuerung des Motors vorgesehene Steueranordnung zum raschen Abbremsen des Elektromotors auslösen kann, die Energieversorgung der Sensoranordnung über die zum Motor führenden Leitungen ohne weitere Maßnahmen sichergestellt ist. Ein gegebenenfalls vorgesehener Energiespeicher, welcher der Sensoranordnung zugeordnet ist, kann deshalb gering bemessen sein oder vollständig entfallen.

Eine alternative Ausführung sieht die Energieversorgung der Sensoranordnung über die beiden zum Elektromotor führenden Leitungen vor. Diese Ausführung ist insbesondere geeignet für eine Vorgabe einer eingeprägten Spannung auf der Signalleitung zur Signalübertragung, wobei die Spannung unabhängig von einer ansonsten erforderlichen Versorgungsspannung festlegbar ist.

Die erfindungsgemäße Vorrichtung zum Erfassen der Bewegung eines bewegbaren Teils ist insbesondere geeignet zur Verwendung in einem Verstellantrieb, der vorzugsweise in Kraftfahrzeugen angeordnet ist. Die geringe Anzahl von Verbindungsleitungen zwischen dem ersten Teil und wenigstens einem zweiten Teil bringt Kosteneinsparungen in der Serienproduktion und erhöht die Übersichtlichkeit.

Weitere vorteilhafte Weiterbildungen und Verbesserungen der erfindungsgemäßen Vorrichtung ergeben sich aus weiteren abhängigen Patentansprüchen.

Die erfindungsgemäße Vorrichtung zum Erfassen der Bewegung eines bewegbaren Teils wird anhand der Zeichnung in der folgenden Beschreibung näher erläutert.

### Zeichnung

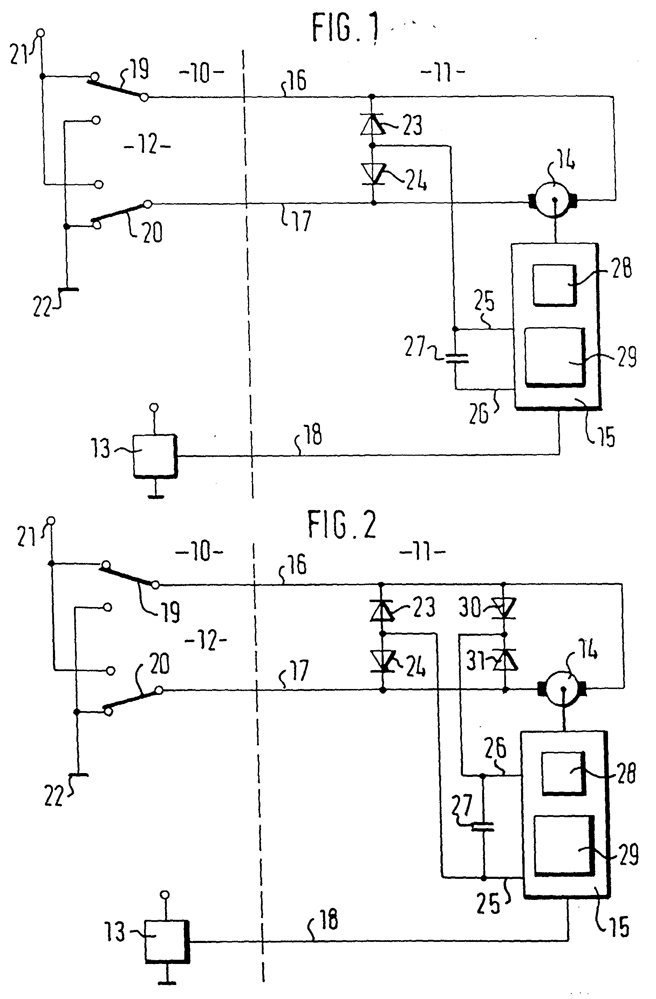

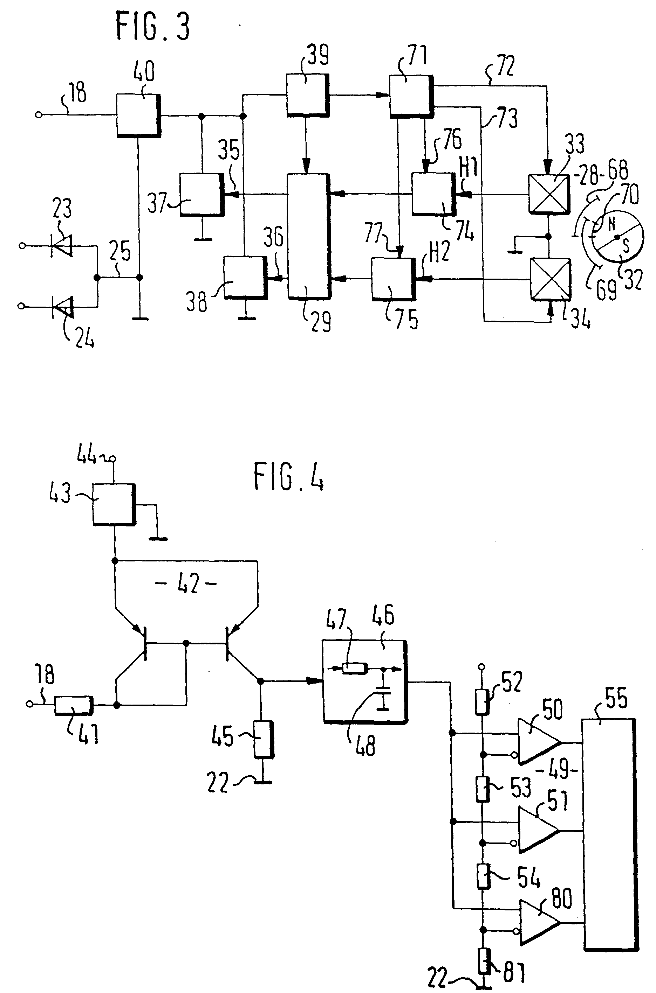

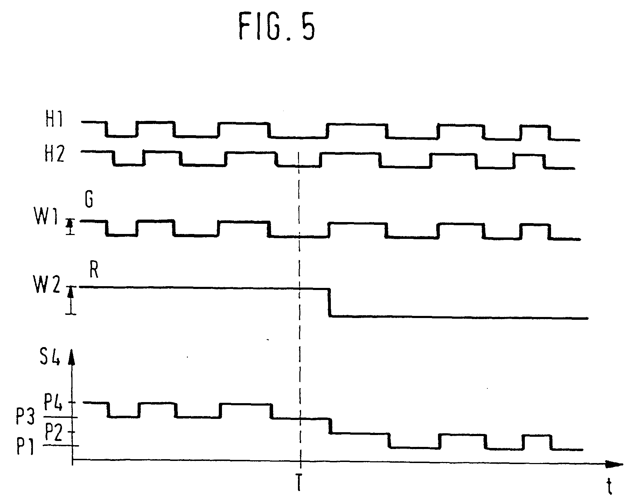

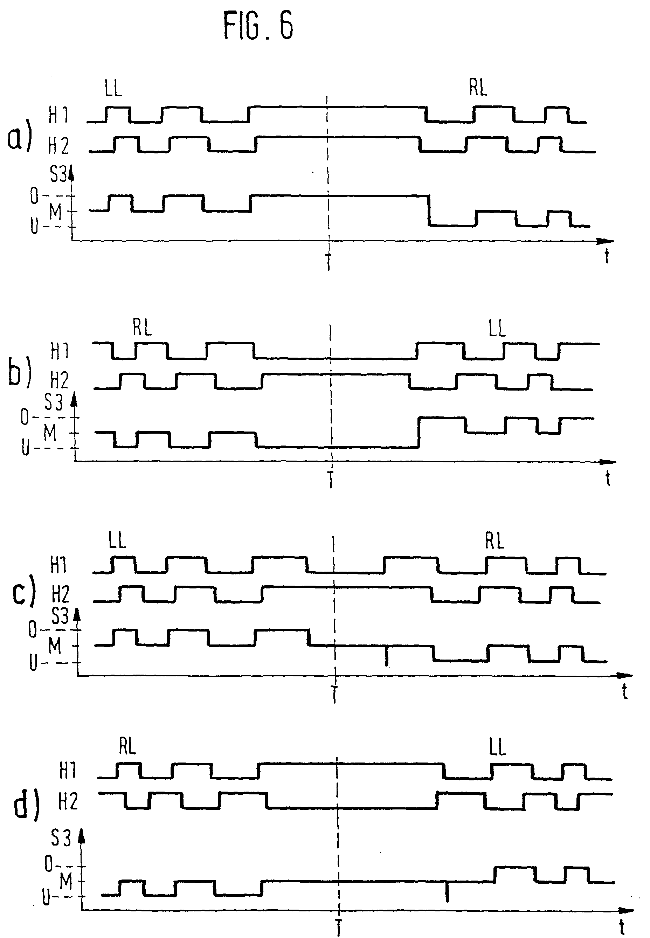

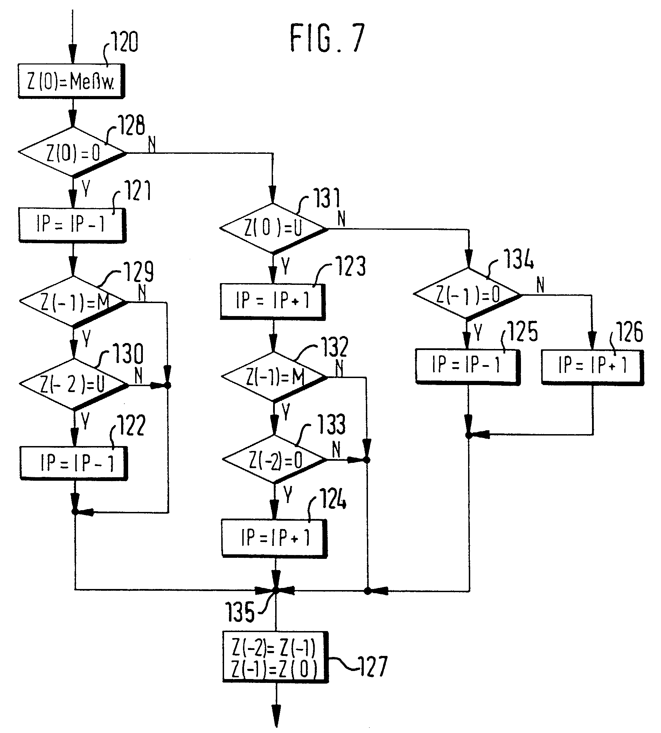

Figuren 1 und 2 zeigen Ausführungsbeispiele einer erfindungsgemäßen Vorrichtung zum Erfassen der Bewegung eines bewegbaren Teils, Figur 3 zeigt ein Ausführungsbeispiel einer Sensoranordnung, Figur 4 zeigt ein Ausführungsbeispiel einer Auswerteanordnung, Figur 5 zeigt Signalverläufe in Abhängigkeit von der Zeit, die in der Sensoranordnung auftreten, Figur 6 zeigt ebenfalls Signalverläufe in Abhängigkeit von der Zeit, die in der Sensoranordnung auftreten und Figur 7 zeigt ein Flußdiagramm eines in der Auswerteanordnung ablaufenden Verfahrens.

Figur 1 zeigt ein erstes Teil 10 und ein vom ersten Teil 10 abgesetztes zweites Teil 11 eines elektromotorischen Antriebs. Die beiden Teile 10, 11 sind strichliniert voneinander getrennt dargestellt. Das erste Teil 10 enthält eine Steueranordnung 12 und eine Auswerteanordnung 13.

Das zweite Teil enthält einen Elektromotor 14 und eine Sensoranordnung 15.

Die Steueranordnung 12 ist mittels zweier Verbindungsleitungen 16, 17 mit dem im zweiten Teil 11 angeordneten Elektromotor 14 verbunden. Eine dritte Leitung 18, die im folgenden als Signalleitung bezeichnet ist, verbindet die Auswerteanordnung 13 mit der im zweiten Teil 11 enthaltenen Sensoranordnung 15.

Die Steueranordnung 12 enthält erste und zweite Schaltmittel 19, 20, welche die Verbindungsleitungen 16, 17 jeweils entweder mit einem Betriebsspannungsanschluß 21 oder mit Masse 22 verbinden. Die Verbindungsleitungen 16, 17 sind jeweils mit Gleichrichterdioden 23, 24 verbunden, deren Anoden jeweils an einem ersten Stromversorgungsanschluß 25 der Sensoranordnung 15 liegen. Zwischen dem ersten versorgungsanschluß 25 und einem zweiten Stromversorgungsanschluß 26 der Sensoranordnung 15 ist ein Kondensator 27 geschaltet. Die Sensoranordnung 15 enthält einen Sensor 28, der in Wirkverbindung mit dem Elektromotor 14 oder mit dem vom Elektromotor 14 angetriebenen Teil steht. Weiterhin ist in der Sensoranordnung 15 eine signalverarbeitende Anordnung 29 vorgesehen.

Bei dem in Figur 2 gezeigten Blockschaltbild des die beiden Teile 10, 11 enthaltenden elektromotorischen Antriebs sind diejenigen Teile, die mit den in Figur 1 gezeigten Teilen übereinstimmen, jeweils mit denselben Bezugszeichen versehen. Der zweite Stromversorgungsanschluß sorgungsanschluß 26 der Sensoranordnung 15 ist über weitere Gleichrichterdioden 30, 31 mit den Verbindungsleitungen 16, 17 verbunden. Der zweite Stromversorgungsanschluß 26 ist jeweils an die Kathodenanschlüsse der Dioden 30, 31 geschaltet.

Figur 3 zeigt ein Ausführungsbeispiel der in den Figuren 1 und 2 gezeigten Sensoranordnung 15. Der Sensor 28 enthält wenigstens einen vom Elektromotor 14 unmittelbar oder mittelbar angetriebenen Permanentmagneten 32, der mit einem ersten und zweiten magnetfeldempfindlichen Element 33, 34 zusammenwirkt. Das erste Element 33 gibt ein erstes Lagesignal H1 an einen ersten Signalspeicher 74 ab. Das erste Lagesignal H1 ist einem ersten Lagebereich 68 zugeordnet. Das zweite Element 34 gibt ein zweites Lagesignal H2 an einen zweiten Signalspeicher 75 ab. Das zweite Lagesignal H2 ist einem zweiten Lagebereich 69 zugeordnet. Die Lagebereiche 68, 69 überlappen sich in einem Gebiet 70. Ausgangssignale der beiden Signalspeicher 74, 75 werden der signalverarbeitenden Anordnung 29 zugeführt, die Steuersignale 35, 36 für gesteuerte Stromquellen 37, 38 bereitstellt.

Zur Energieversorgung der magnetfeldempfindlichen Elemente 33, 34 und der signalverarbeitenden Anordnung 29 ist eine weitere Stromquelle 39 vorgesehen. Die weitere Stromquelle 39 gibt die Energie an einen Umschalter 71 ab, der die Energie über die Leitungen 72, 73 jeweils zu den magnetfeldempfindlichen Elementen 33, 34 weiterleitet. Der Umschalter 71 gibt weiterhin Speichersignale 76, 77 an die Signalspeicher 74, 75 ab. Die Signalleitung 18 führt zu einem Spannungsregler 40, dessen Ausgang mit den Stromquellen 37, 38 sowie mit der weiteren Stromquelle 39 verbunden ist. Der Spannungsregler 40 ist weiterhin mit dem ersten Stromversorgungsanschluß 25 verbunden, der zu den Anoden-Anschlüssen der Gleichrichterdioden 23, 24 führt. Die Dioden 23, 24 sind in Figur 3 nochmals eingetragen, um zu verdeutlichen, daß die in Figur 3 gezeigten magnetfeldempfindlichen Elemente 33, 34 einschließlich der Dioden 23, 24; 30, 31 sowie die weiteren in Figur 3 gezeigten Funktionsblöcke, bis auf den Permanentmagneten 32, innerhalb einer integrierten Schaltung untergebracht sein können.

Figur 4 zeigt ein Ausführungsbeispiel der Auswerteanordnung 13. Die Siganlleitung 18 führt über einen Widerstand 41 zu einer Stromspiegelschaltung 42. Als Energiequelle ist eine Spannungswandlerschaltung 43 vorgesehen, welche die an einem Stromversorgungsanschluß 44 liegende Spannung auf ein höheres Potential hochtransformiert. An einem ausgangsseitigen Arbeitswiderstand 45 tritt eine Spannung auf, die dem über die Signalleitung 18 fließenden Strom entspricht. Das am Arbeitswiderstand 45 auftretende Spannungssignal wird über eine Tiefpaßanordnung 46, die eine Widerstands-Kondensator-Kombination 47, 48 enthält, auf eine Komparatoranordnung 49 gegeben. Die Komparatoranordnung 49 enthält drei Differenzverstärker 50, 51, deren invertierender Eingang jeweils an einer vier Widerstände 52, 53, 54, 81 enthaltenden Widerstandsteilerkette angeschlossen sind. Die nichtinvertierenden Eingänge der Differenzverstärker 50, 51, 80 sind mit dem Tiefpaß 46 verbunden. Die Differenzverstärker 50, 51, 80 geben Ausgangssignale an einen Mikroprozessor 55 ab.

Figur 5 zeigt ein über die dritte Signalleitung 18 übertragenes Signal S4. Das Signal S4 entsteht aus der Addition eines Geschwindigkeitssignals G und eines Richtungssignals R. Das Geschwindigkeitssignal G weist einen Wert W1 und das Richtungssignal R einen Wert W2 auf. Durch die Addition der Signale G, R ergeben sich vier unterschiedliche Pegel P1 - P4 des Signals S4. Das Geschwindigkeitssignal G und das Richtungssignal R sind aus den beiden von den magnetfeldempfindlichen Elementen 33, 34 abgegebenen Signalen H1, H2 in der signalverarbeitenden Anordnung 29 abgeleitet.

Die in Figur 5 eingetragene momentane Zeit T gibt den Zeitpunkt an, bei dem das bewegbare Teil oder der Elektromotor 14 die Bewegungsrichtung ändert.

Figur 6 zeigt in den Bildern a - d jeweils ein Signal S3, das über die Signalleitung 18 übertragen wird. Gegenüber dem in Figur 5 gezeigten Signal S4, das vier unterschiedliche Pegel P1 - P4 aufweist, liegen dem Signal S3 drei unterschiedliche Pegel zugrunde. Ein oberer Pegel ist mit O, ein mittlerer Pegel mit M und ein unterer Pegel mit U bezeichnet. In den Bildern a - d der Figur 6 sind weiterhin jeweils die Signale H1, H2 eingetragen. Zur Zeit T wechselt das bewegbare Teil oder zumindest der Elektromotor 14 die Bewegungsrichtung.

Das in Figur 7 gezeigte Flußdiagramm enthält Zuweisungen 120 - 127, Anfragen 128 - 134 und ein Sprungziel 135. Die in den Zuweisungen und Abfragen eingetragenen Signalpegel Z geben jeweils Signalpegel zu unterschiedlichen Zeiten des in Figur 6 gezeigten Signals S3 an. Die Werte für Z können daher O, M oder U sein. Die bei den Signalpegeln Z in Klammern eingetragenen Zahlen geben an, zu welchem Zeitpunkt der Signalpegel Z vorgelegen hat. Z(0) ist der aktuelle Signalpegel, der nach dem letzten Pegelsprung des Signals S3 vorliegt. Der Signalpegel Z(-1) entspricht dem letzten Signalpegel, der nach dem vorletzten Pegelsprung des Signals S3 vorgelegen hat und der Signalpegel Z(-2) entspricht dem vorletzten Signalpegel, der nach dem vorvorletzten Pegelsprung des Signals S3 vorgelegen hat. Mit IP ist eine aktuelle Ist-Position bezeichnet, die in der Auswerteanordnung 13 ermittelt wird. Das Verfahren, das mit dem Flußdiagramm gemäß Figur 7 realisiert ist, wird später näher erläutert.

Zunächst wird die Funktion der in den Figuren 1 und 2 gezeigten Vorrichtung zum Erfassen der Bewegung eines bewegbaren Teils erläutert:
Die im ersten Teil 10 enthaltene Steueranordnung 12 sowie die Auswerteanordnung 13 sind beispielsweise in einem zentralen Gerät untergebracht, an das wenigstens ein zweites Teil 11 angeschlossen ist. Der zweite Teil 11 ist vorzugsweise in einem Gehäuse enthalten, das den Elektromotor 14 und die in unmittelbarer Motornähe 10 installierte Sensoranordnung 15 aufnimmt. Zu jedem angeschlossenen zweiten Teil 11 führen die Verbindungsleitungen 16, 17 sowie die Signalleitung 18.

Die Steueranordnung 12 hat die Aufgabe, die Betriebsspannung an den Verbindungsleitungen 16, 17 für den Elektromotor 14 derart vorzugeben, daß der Elektromotor 14 in der einen oder in der anderen Drehrichtung betreibbar ist. Die Steueranordnung 12 enthält die beiden Schaltmittel 19, 20, die die Verbindungsleitungen 16, 17 entweder mit dem Betriebsspannungsanschluß 21 oder mit Masse 22 verbinden. Die Schaltmittel 19, 20 können auch derart betätigt werden, daß beide Verbindungsleitungen 16, 17 über die Schaltmittel 19, 20 entweder gleichzeitig an Masse 22 oder gleichzeitig an den Betriebsspannungsanschluß 21 geschaltet werden können. Der Elektromotor 14 ist somit kurzschließbar. Mit dieser Maßnahme ist ein rasches Abbremsen des Elektromotors 14 möglich.

Der Elektromotor 14 im zweiten Teil 11 ist zum Antreiben eines nicht näher gezeigten bewegbaren Teils vorgesehen. Ein solches bewegbares Teil ist beispielsweise Bestandteil eines Verstellantriebs, der vorzugsweise in einem Kraftfahrzeug vorgesehen ist. Das bewegbare Teil ist beispielsweise eine Antenne, ein Faltverdeck, ein Fenster, ein Rückspiegel, ein Teil eines Sitzes und/oder ein Schiebedach.

Über die Signalleitung 18 ist eine Signalübertragung vom zweiten Teil 11 zum ersten Teil 10 vorgesehen. Übertragen wird entweder das Signal S4 oder das Signal S3, aus dem die Auswerteanordnung 13 die Bewegung des bewegbaren Teils ermitteln kann. Der Permanentmagnet 32, der bei einem magnetischen Sensor 28 vorgesehen sein kann, ist entweder mit dem bewegbaren Teil oder vorzugsweise unmittelbar mit der Motorwelle oder einer Getriebewelle verbunden. Die Auswerteanordnung 13 leitet aus dem Signal S4, S3 die Richtungs- und die Geschwindigkeitsinformation ab. Bei translatorischen Bewegungen ist unmittelbar eine Richtung und eine Geschwindkeit angebbar. Bei rotatorischen Bewegungen entspricht dem Richtungsssignal R die Drehrichtung und dem Geschwindigkeitssignal G die Winkelgeschwindigkeit oder die Drehzahl. Aus Richtungs- und Geschwindigkeitssignal G, R kann die Auswerteanordnung die Ist-Position IP des bewegbaren Teils ermitteln. In Abhängigkeit vom ermittelten Signal erfolgt beispielsweise die Ansteuerung des Elektromotors 14 in der einen oder in der anderen Richtung. Beispielsweise kann mit einem Drehzahl- und Drehrichtungssignal R, G auch ein Einklemmschutz realisiert werden, der das Einklemmen von Gegenständen oder von Körperteilen zwischen dem bewegbaren Teil und einem anderen, ebenfalls nicht gezeigten festen Teil verhindert.

Die in der Sensoranordnung 15 enthaltene signalverarbeitende Anordnung 29 benötigt im allgemeinen eine Energieversorgung. Auch der Sensor 28 benötigt häufig bereits selbst eine Energieversorgung. Die magnetfeldempfindlichen Elemente 33, 34 können ebenfalls einen Energiebedarf aufweisen. Bei einem auf dem Hall-Effekt basierenden magnetfeldempfindlichen Element muß ein Strom bereitgestellt werden. Magnetoresistive Elemente müssen ebenfalls von einem Strom durchflossen werden, damit ein Sensorsignal erhalten werden kann.

Bei dem in Figur 1 gezeigten Ausführungsbeispiel ist eine Energieversorgung der Sensoranordnung 15 über die Signalleitung sowie über wenigstens eine der beiden Verbindungsleitungen 16, 17 vorgesehen. Der erste Stromversorgungsanschluß 25 der Sensoranordnung 15 ist über die als Gleichrichter wirkenden Dioden 23, 24 mit den zu dem Elektromotor 14 führenden Verbindungsleitungen 16, 17 verbunden. Zunächst ist während des Betriebs des Elektromotors 17 sichergestellt, daß auf einer der beiden Verbindungsleitungen 16, 17 das benötigte Potential auftritt. Im gezeigten Ausführungsbeispiel ist dies das negative Potential. Aber auch in Stillstandszeiten des Elektromotors 14 ist die Energieversorgung sichergestellt, weil die Schaltmittel 19, 20 zumindest eine der beiden Leitungen 16, 17 mit Masse 22 verbinden, wobei die Masse 22 dem negativen Potential entspricht. Im Falle eines Kurzschließens des Elektromotors 14 gegen Masse 22 führen beide Leitungen 16, 17 negatives Potential. Das positive Potential wird der Sensoranordnung 15 über die Signalleitung 18 zugeleitet. Die Auswerteanordnung 13 verbindet die Signalleitung 18 über eine Schaltung, die anhand der Beschreibung von Figur 4 näher erläutert wird, mit einem Stromversorgungsanschluß, der das passende positive Potential aufweist. Gegebenenfalls ist der Kondensator 27 vorgesehen, der eine Energiespeicherung vornehmen kann. Der Kondensator 27 ist zwischen dem ersten Stromversorgungsanschluß 25 und dem zweiten Stromversorgungsanschluß 26 der Sensoranordnung 15 geschaltet. Der zweite Stromversorgungsanschluß 26 kann beispielsweise intern unmittelbar mit der Signalleitung 18 verbunden sein. Die Energiespeicherung im Kondensator 27 für eine kurze Zeit kann in dem Betriebszustand erforderlich sein, der dann gegeben ist, wenn die beiden Schaltmittel 19, 20 zum Abbremsen des Elektromotors 14 die beiden Verbindungsleitungen 16, 17 gleichzeitig mit dem Betriebsspannungsanschluß 21 verbinden, der positives Potential führt. Der Kondensator 27 muß in diesem Fall für die Sensoranordnung 15 noch so lange Energie bereitstellen, bis der Elektromotor 14 abgebremst ist. Mit anderen Maßnahmen, die anhand des in Figur 4 gezeigten Schaltbildes näher erläutert sind, kann der Kondensator 27 auch in diesem Betriebsfall vollständig entfallen.

Der Unterschied zwischen den in Figur 1 und Figur 2 gezeigten Ausführungen des elektromotorischen Antriebs liegt im wesentlichen darin, daß bei der in Figur 2 gezeigten Ausführung die Energieversorgung für die Sensoranordnung 15 vollständig über die beiden zum Elektromotor 14 führenden Verbindungsleitungen 16, 17 erfolgt. Die Gleichrichterdioden 23, 24 stellen am ersten Stromversorgungsanschluß 25 negatives und die Gleichrichterdioden 30, 31 am zweiten Stromversorgungsanschluß positives Potential zur Verfügung. Die Energieversorgung ist stets während des Betriebs des Elektromotors 14 sichergestellt. Um auch bei einem gegebenenfalls vorgesehenen Kurzschließen des Elektromotors 14 eine genügende Energiereserve bereithalten zu können, ist der Kondensator 27 zur Energiespeicherung stets dann erforderlich, wenn auch während des Anbremsvorgangs des Elektromotors 14 die Sensoranordnung 15 Signale an die Auswerteanordnung 13 übertragen sollen. In einer Ausgestaltung der in Figur 2 gezeigten Ausführung des elektromotorischen Antriebs ist vorgesehen, daß die Sensoranordnung 15 die Spannung an der Signalleitung 18 einprägt. Diese Ausgestaltung ist dadurch möglich, daß auf der Signalleitung 18 nur noch die Signalübertragung vom zweiten Teil 11 zum ersten Teil 10 stattfindet. Ein weiterer Vorteil der Ausführung ergibt sich durch die wahlfreie Festlegung der auf der Signalleitung 18 übertragenen Signalpegel, gleichgültig ob Strom oder Spannung, die eine einfache und sichere Auswertung ermöglicht.

Bei der in Figur 3 gezeigten Sensoranordnung 15 ist als Sensor 28 beispielhaft ein Magnetfeldsensor zugrundegelegt. Der Sensor 28 mit den beiden magnetfeldempfindlichen Elementen 33, 34, vorzugsweise Halleffekt-Elemente, geben die Lagesignale H1, H2 an die Signalspeicher 74, 75 in Abhängigkeit von der Stellung des Permanentmagneten 32 ab. Die Lagesignale H1, H2 werden in den Signalspeichern 74, 75 in Abhängigkeit vom Speichersignal 76, 77 für eine vorgegebene Zeit gespeichert. Die Speichersignale 76, 77 stellt der Umschalter 71 bereit, der auch die Energieversorgung der magnetfeldempfindlichen Elemente 33, 34 über die Leitungen 72, 73 steuert. Die Stromaufnahme der als Halleffekt-Sensoren realisierten magnetfeldempfindlichen Elemente 33, 34 wird im wesentlichen durch den Querstrom in den Elementen 33, 34 festgelegt. Der Umschalter 71 schaltet die Versorgungsspannung zwischen den beiden Elementen 33, 34 in periodischen Zeitabständen um. Die Signalauswertung erfolgt nur bei dem gerade mit Energie versorgten Element 33, 34. Während das jeweils andere Element 33, 34 mit Energie versorgt ist, wird das Lagesignal H1, H2 im Signalspeicher 74, 75 zwischengespeichert. Die zeitgleiche Steuerung der Signalspeicher 74, 75 mit der Umschaltung der Energieversorgung erfolgt im Umschalter 71. Die Frequenz für die Umschaltung der Energieversorgung zwischen den magnetfeldempfindlichen Elementen 33, 34 sollte wenigstens doppelt so hoch gewählt werden wie die Frequenz der zu erwartenden Zustandsänderungen des Sensors 28. Der wesentliche Vorteil dieser Maßnahme ist die Reduzierung der Gesamtenergieaufnahme, die sich besonders vorteilhaft durch die damit verbundene Reduzierung des über die Signalleitung 18 zu transportierenden Stroms bemerkbar macht.

Die signalverarbeitende Anordnung 29 gibt mit Steuersignalen 35, 36 entweder die an der Signalleitung 18 liegende Spannung oder den über die Signalleitung 18 fließenden Strom vor. Im gezeigten Ausführungsbeispiel steuert die signalverarbeitende Anordnung 29 zwei Stromquellen 37, 38 an, die entweder auf gleiche oder auf unterschiedliche diskrete Stromwerte fest eingestellt sind. Zur Übertragung des Signals S3 sind gleiche diskrete Stromwerte vorzugeben. Bei der Übertragung des Signals S4 gibt die eine Stromquelle 37, 38 gegenüber der anderen Stromquelle 37, 38 einen doppelten diskreten Stromwert vor. Die signalverarbeitende Anordnung 29 enthält beispielsweise Verstärkerschaltungen, Komparatoren, Filterschaltungen zum Unterdrücken von Störungen und Treiberschaltungen. Ferner enthält die signalverarbeitende Anordnung 29 Mittel zum Bereitstellen des Geschwindigkeitssignals G und des Richtungssignals R. Das Geschwindigkeitssignal G und das Richtungssignal R werden aus den Signalen H1, H2 ermittelt, die in den Figuren 5 und 6 dargestellt sind. In den in den Figuren 5 und 6 gezeigten Ausführungsbeispielen ist das Geschwindigkeitssignal G identisch mit dem Signal H1, dessen Änderungen in den Signalen S4 oder S3 auftreten. Das Richtungssignal R wird bei einer Pegeländerung, im gezeigten Ausführungsbeispiel bei einer positiven Flanke, in Abhängigkeit von dem gerade vorliegenden Pegel des Signals H2 festgelegt. Die von den Quellen 37, 38 vorgegebenen Ströme addieren sich auf der Signalleitung 18, die dann entweder das Signal S3 oder das Signal S4 führt. Bei der Vorgabe des über die Signalleitung 18 fließenden Stroms ist es erforderlich, daß der zur Energieversorgung der signalverarbeitenden Anordnung 29 und der magnetfeldempfindlichen Elemente 33, 34 erforderliche Strom einen bekannten Wert aufweist, der in der Auswerteanordnung 13 berücksichtigt werden kann. Vorteilhafterweise ist deshalb in der Sensoranordnung 15 die weitere Stromquelle 39 angeordnet, die den Versorgungsstrom unabhängig von der Spannung festhält.

Eine vorteilhafte Ausgestaltung sieht den Einsatz des Spannungsreglers 40 vor. Der Spannungsregler 40 gibt einerseits eine feste Betriebsspannung für die Sensoranordnung 15 und die magnetfeldempfindlichen Elemente 33, 34 vor. Andererseits reduziert er Störspannungseinflüsse. Solche Störungen sind beispielsweise negative Impulse, die beim Abschalten des Elektromotors 14 über die Dioden 23, 24 in die Sensoranordnung 15 eingekoppelt werden.

Das in Figur 4 gezeigte Ausführungsbeispiel der Auswerteanordnung 13 enthält eingangsseitig die Stromspiegelschaltung 42, die den über die Signalleitung 18 fließenden Strom in eine entsprechende Ausgangsspannung am Arbeitswiderstand 45 umsetzt. Der eingangsseitig vorgesehene Widerstand 41 begrenzt den über die Signalleitung 18 fließenden Strom auf einen von der Betriebsspannung abhängigen Maximalwert und erfüllt somit eine Schutzfunktion. Die Stromspiegelschaltung 42 ist beispielsweise in dem Fachbuch von U. TIETZE und CH. SCHENK, "Halbleiterschaltungstechnik", 5. Auflage, Springer-Verlag, 1980, Seiten 54 und 112 näher erläutert, so daß eine detaillierte Schaltungsbeschreibung hier nicht erforderlich ist. Das am Arbeitswiderstand 45 auftretende Signal gelangt über die Tiefpaßanordnung 46 an die Komparatoranordnung 49. Die Tiefpaßanordnung 46, die im einfachsten Fall als Widerstands-Kondensator-Kombination 47, 48 als Tiefpaß erster Ordnung realisiert ist, reduziert gegebenenfalls eingekoppelte hochfrequente Störungen auf ein unschädliches Maß. Anstelle eines Tiefpasses erster Ordnung ist es auch möglich, einen Tiefpaß höherer Ordnung oder eine Bandfilterschaltung vorzusehen. Die Komparatorschaltung 49 ermöglicht die Detektion entweder der drei oder der vier unterschiedlichen Signalpegel P1 - P4, O, M, U. Bei dem in Figur 4 gezeigten Ausführungsbeispiel sind die drei Komparatoren 50, 51, 80 vorgesehen, die die Detektion von vier unterschiedlichen Signalpegeln ermöglichen. Bei der Übertragung des Signals S3 mit lediglich drei unterschiedlichen Signalpegeln kann ein Komparator, beispielsweise der Komparator 80 entfallen. Die einzelnen Pegel sind durch die als Spannungsteiler geschalteten Widerstände 52, 53, 54, 81 festgelegt. Anzapfungen des Spannungsteilers sind mit den invertierenden Eingängen der drei Differenzverstärker 50, 51, 80 verbunden, die als Komparatoren arbeiten. Die Ausgangssignale der drei Differenzverstärker 50, 51, 80 sind Eingangsports des Mikroprozessors 55 zugeleitet, der die weitere Signalauswertung und Signalverarbeitung vornimmt. Der Mikroprozessor 55 ermittelt entweder aus dem Signal S3 oder aus dem Signal S4 die Richtung, die Geschwindigkeit oder eine abgeleitete Größe, beispielsweise die aktuelle Position IP daraus.

Eine besonders vorteilhafte Weiterbildung sieht den Einsatz der Spannungswandlerschaltung 43 vor. Die Spannungswandlerschaltung 43, deren Schaltung beispielsweise aus dem bereits zitierten Fachbuch von U. TIETZE und CH. SCHENK bekannt ist, erhöht die am Stromversorgungsanschluß 44 liegende Spannung auf einen höheren Wert. Der Stromversorgungsanschluß 44 liegt im allgemeinen auf demselben Potential wie der Betriebsspannungsanschluß 21 für die Betriebsspannung des Elektromotors 14. Die Spannungswandlerschaltung 43 ermöglicht deshalb auch dann noch eine sichere Energieversorgung der Sensoranordnung 15 und der magnetfeldempfindlichen Elemente 33, 34, wenn die beiden Schaltmittel 19, 20 den Elektromotor gleichzeitig mit dem ersten Betriebsspannungsanschluß 21 zum Kurzschließen des Motors verbinden. Eine andere Möglichkeit, die Energieversorgung der Sensoranordnung 15 sicherzustellen, wenn die beiden Schaltmittel 19, 20 zum Abbremsen des Elektromotors 14 die beiden Verbindungsleitungen 16, 17 gleichzeitig mit dem Betriebsspannungsanschluß 21 verbinden, besteht darin, die Polarität auf der Signalleitung 18 zu ändern. Über die Signalleitung wird das negative Potential übertragen, während über wenigstens eine der beiden Verbindungsleitungen 16, 17 das positive Potential bereitgestellt wird. In dem in Figur 1 gezeigten Ausführungsbeispiel muß die Polarität der Dioden 23, 24 geändert werden. Der erste Stromversorgungsanschluß 25 der Sensoranordnung 15 ist mit den Kathodenanschlüssen der Dioden 23, 24 zu verbinden. Weiterhin ist in der Auswerteanordnung 13 die Stromspiegelschaltung 42 in ihrer Polarität zu ändern. Anstelle der in Figur 4 gezeigten PNP-Transistoren werden NPN-Transistoren eingesetzt, deren Emitter jeweils an Masse 22 liegen. Der Arbeitswiderstand 45 ist mit dem Stromversorgungsanschluß 44 zu verbinden.

Anstelle der in Figur 4 gezeigten Komparatoranordnung 59 ist es auch möglich, das vom Tiefpaß 46 abgegebene Signal einem Analog/Digital-Wandler zuzuleiten. Der Vorteil dieser Ausgestaltung liegt darin, daß ein im Mikroprozessor 55 gegebenenfalls bereits vorhandener Analog/Digital-Wandler eingesetzt werden kann. In dieser Ausgestaltung kann dann die Komparatoranordnung 49 vollständig entfallen. Das in Figur 5 gezeigte Signal S4, das über die Signalleitung 18 übertragen wird, weist die vier diskreten Signalpegel P1 - P4 auf. Das Signal S4 entsteht aus der Addition des Geschwindigkeitssignals G und des Richtungssignals R. Bei dem in Figur 5 gezeigten Ausführungsbeispiel weist das Richtungssignal R den doppelten diskreten Pegel gegenüber dem Geschwindigkeitssignal G auf. Das Signal R wird bei dem in Figur 5 gezeigten Ausführungsbeispiel bei den positiven Signalflanken des Signals H1 in Abhängigkeit vom gerade vorliegenden Pegel des Signals H2 festgelegt. Zum Zeitpunkt T ändert sich die Bewegungsrichtung des bewegbaren Teils. Bei der nächsten Positiven Flanke des Signals H1 nach dem Zeitpunkt T tritt deshalb die Änderung im Richtungssignal R auf. Der besondere Vorteil bei der Pegelfestlegung der Signale G, die zu den vier unterschiedlichen Pegeln P1 - P4 des Signals S4 führen, liegt darin, daß die Auswerteanordnung 13 das Geschwindigkeitssignal G und das Richtungssignal R aus den vier unterschiedlichen Pegeln P1 - P4 mühelos ermitteln kann.

Bei dem in Figur 6 gezeigten Ausführungsbeispiel wird das über die Signalleitung 18 übertragene Signal S3 mit den drei unterschiedlichen Signalpegeln U, M, O, übertragen. Das Signal S3 entsteht ebenfalls aus der Addition des Geschwindigkeitssignals G und des Richtungssignals R. Das Geschwindigkeitssignal G und das Richtungssignal R sind jeweils in den Bildern a - d der Figur 6 nicht mehr eingetragen. Das Signal S3 entsteht durch die Addition dieser Signale G, R. In Abhängigkeit von der gerade vorliegenden Bewegungssituation des bewegbaren Teils kann beim Signals S3 gegenüber dem Signal S4 eine Zweideutigkeit auftreten. Der mittlere Signalpegel M kann entweder durch eine Stromquelle 37, 38 mit dem Geschwindigkeitssignal G aktiviert oder von der anderen Stromquelle 37, 38 mit dem Richtungssignal R aktiviert sein. Diese Zweideutigkeit tritt bei den in Figur 6 gezeigten Bildern a, b nicht auf. Dort tritt ein Drehrichtungswechsel nach dem Zeitpunkt T jeweils ausgehend entweder vom oberen Pegel O oder vom unteren Pegel U auf. Der Signalpegel des Signals S3 springt daher nach dem Zeitpunkt T entweder von dem oberen Pegel O auf den unteren Pegel U oder umgekehrt. Bei den in den Bildern c, d der Figur 6 gezeigten Situationen tritt der Drehrichtungswechsel nach dem Zeitpunkt T dann auf, wenn das Signal S3 den mittleren Pegel M aufweist. Ein negativer Pegelsprung des Richtungssignals fällt gerade mit einem positiven Pegelsprung des Geschwindigkeitssignals zusammen. Der Zustand M ist also nicht eindeutig. In den Bildern c, d ist dieser nicht vollständig definierte Zustand im Signal S3 mit einem als Strich angedeuteten Pegeleinbruch nach dem Zeitpunkt T angedeutet. Der nicht definierte Zustand tritt lediglich bei einem Drehrichtungswechsel auf. Auswirkungen auf ein Ergebnis in der Auswerteanordnung 13 sind nur dann zu erwarten, wenn die Auswerteanordnung 13 aus dem zurückgewonnenen Richtungs- und Geschwindigkeitssignal R, G eine aktuelle Ist-Position des bewegbaren Teils ermittelt. Ein solcher Zählimpuls kann bei den in den Bildern c, d gezeigten Situationen nicht ohne weiteres über die Signalleitung 18 übertragen werden. Falls eine hohe Genauigkeitsanforderung vorliegt, kann dieser verlorengegangene Zählimpuls mit einem in der Auswerteanordnung 13 ablaufenden Verfahren dennoch ermittelt werden, dessen Flußdiagramm in Figur 7 gezeigt ist.

In der Zuweisung 120 wird der aktuelle Signalpegel Z(0) ermittelt, der nach dem letzten Pegelsprung des Signals S3 aufgetreten ist. In der Abfrage 128 wird festgestellt, ob der aktuelle Signalpegel Z(0) dem oberen Pegel 0 entsprochen hat. Falls dies zutrifft wird in der Zuweisung 121 die Ist-Position festgelegt aus der bisherigen Ist-Position, die um einen Zählimpuls vermindert wird. Die Zählimpulse entsprechen einer bestimmten Positionsänderung, die positiv oder negativ sein kann. In der Abfrage 129 wird ermittelt, ob der letzte Signalpegel Z(-1) nach dem vorletzten Pegelsprung den mittleren Signalpegel M aufgewiesen hat. Falls dies zutrifft wird zu einer weiteren Abfrage 130 weitergesprungen, in der festgestellt wird, ob der vorletzte Signalpegel Z(-2), der nach dem vorvorletzten Pegelsprung aufgetreten ist, dem unteren Pegel U entsprochen hat. Falls auch dies der Fall ist, wird in der Zuweisung 122 die Ist-Position auf die bisherige Ist-Position vermindert um einen Zählimpuls festgelegt. Falls sowohl in der Abfrage 129 als auch in der Abfrage 130 ein negatives Ergebnis herauskommt, wird unmittelbar zum Knoten 135 gesprungen, ohne daß die Wertezuweisung 122 vorgenommen wird.

Bei einem Nein-Ergebnis in der Abfrage 128 wird zu einer Abfrage 131 gesprungen, in der festgestellt wird, ob der aktuelle Signalpegel Z (0), der nach dem letzten Pegelsprung aufgetreten ist, dem unteren Pegel U entspricht. Falls dies der Fall ist, wird in der Zuweisung 123 die Ist-Position festgelegt als die bisherige Ist-Position plus einem Zählimpuls. In einer nachfolgenden Abfrage 132 wird festgestellt, ob der letzte Signalpegel Z(-1) dem mittleren Signalpegel M entsprochen hat. Falls dies zutrifft, wird in der nächsten Abfrage 133 festgestellt, ob der vorletzte Signalpegel Z(-2), der nach dem vorvorletzten Pegelsprung aufgetreten ist, dem oberen Signalpegel O entsprochen hat. Falls auch dies zugetroffen hat, wird in der Zuweisung 124 die Ist-Position aus der bisherigen Ist-Position plus einem Zählimpuls festgelegt. Falls entweder in der Abfrage 132 oder in der Abfrage 133 eine Nein-Entscheidung aufgetreten ist, wird ohne die Zuweisung 124 zu beachten unmittelbar zum Knoten 135 gesprungen.

Im Falle einer Nein-Entscheidung in der Abfrage 131 wird zur letzten Abfrage 134 gegangen, in der festgestellt wird, ob der letzte Signalpegel Z(-1) nach dem vorletzten Pegelsprung den oberen Pegel O aufgewiesen hat. Falls dies zutrifft, wird in der Zuweisung 125 die Ist-Position aus der bisherigen Ist-Position minus einem Zählimpuls festgelegt. Falls dies nicht zutrifft, wird in der Zuweisung 126 die Ist-Position festgelegt aus der bisherigen Ist-Position plus einem Zählimpuls. Nach den Zuweisungen 125, 126 wird zum Knoten 135 gesprungen.

Der Knoten 135 führt zur letzten Zuweisung 127, in welcher die Signalpegel Z(-2), Z(-1) aktualisiert werden. Der neue, vorletzte Signalpegel Z (-2) ergibt sich aus dem gerade gültigen letzten Signalpegel Z (-1) und der neue, letzte Signalpegel Z (-1) ergibt sich aus dem gerade gültigen aktuellen Signalpegel Z (0). Nach dem Auftreten eines erneuten Pegelsprungs des Signals S3 wird in der Zuweisung 120 dem neuen aktuellen Signalpegel Z(0) der erfaßte Pegel U, M, O zugewiesen.

Das anhand des in Figur 7 gezeigten Flußdiagramms ablaufende Verfahren in der Auswerteanordnung 13 bewirkt, daß bei einem Richtungswechsel oder bei einem Stillstand des bewegbaren Teils, bei dem das Signal S3 den mittleren Pegel M aufweist, der folgende Pegelwechsel bei einer Bestimmung der Ist-Position des bewegbaren Teils doppelt gezählt wird. Die Auswerteanordnung 13 ist somit in der Lage, die Ist-Position des bewegbaren Teils stets soweit exakt zu bestimmen, wie es die Auflösung des Sensors 28 zuläßt.

## Patentansprüche

1. Vorrichtung zum Erfassen der Bewegung eines bewegbaren Teils, mit einem ersten Lagesensor (33), der in Wirkverbindung mit dem bewegbaren Teil steht und der ein erstes Signal (H1) abgibt, das einem ersten Lagebereich des bewegten Teils zugeordnet ist, und mit einem zweiten Lagesensor (34), der in Wirkverbindung mit dem bewegbaren Teil steht und der ein Zweites Signal (H2) abgibt, das wenigstens einem zweiten Lagebereich des bewegten Teils zugeordnet ist, dadurch gekennzeichnet, daß die beiden Lagebereiche ein Überlappungsgebiet (70) aufweisen, daß die von den Lagesensoren (33, 34) abgegebenen Signale (H1, H2) einer signalverarbeitenden Anordnung (29) zugeleitet sind, die aus den beiden Signalen (H1, H2) für das bewegte Teil ein Richtungs- und ein Geschwindigkeitssignal (R, G) ermittelt, daß dem Richtungs- und dem Geschwindigkeitssignal (R, G) diskrete Werte (W1, W2) zugeordnet sind und daß die addierten diskreten Werte (W1, W2) über eine Signalleitung (18) zu einer Auswerteanordnung (13) geführt sind, die aus den addierten diskreten Werten (W1, W2) die Richtung, die Geschwindigkeit oder eine abgeleitete Größe des bewegbarn Teils ermittelt.

2. Vorrichtung nach Anspruch 1, dadurch gekennzeichnet, daß die diskreten Werte (W1, W2) wenigstens näherungsweise gleich groß sind.

3. Vorrichtung nach Anspruch 1, dadurch gekennzeichnet, daß die diskreten Werte (W1, W2) unterschiedlich sind, wobei ein Wert (W1, W2) gegenüber dem anderen Wert (W1, W2) wenigstens näherungsweise den doppelten Wert aufweist.

4. Vorrichtung nach Anspruch 1, dadurch gekennzeichnet, daß als Lagesensoren (33, 34) magnetfeldempfindliche Elemente, vorzugsweise Halleffekt-Elemente eingesetzt sind.

5. Vorrichtung nach Anspruch 1, dadurch gekennzeichnet, daß zur Addition zwei gesteuerte Stromquellen (27, 28) vorgesehen sind, die jeweils einen vorgegebenen Strom auf der Signalleitung (18) einprägen.

6. Vorrichtung nach Anspruch 5, dadurch gekennzeichnet, daß in einer mit der Signalleitung (18) verbundenen Auswerteanordnung (13) eine Stromspiegelschaltung (42) enthalten ist.

7. Vorrichtung nach Anspruch 5, dadurch gekennzeichnet, daß in einer mit der Signalleitung (18) verbundenen Auswerteanordnung (13) eine Schaltung (43) zur Erhöhung der Spannung auf der Signalleitung (18) vorgesehen ist.

8. Vorrichtung nach Anspruch 4, dadurch gekennzeichnet, daß die Halleffekt-Elemente (33, 34), die signalverarbeitende Anordnung (29) sowie die Stromquellen (37, 38) in einer integrierten Schaltung enthalten sind.

9. Vorrichtung nach Anspruch 1, dadurch gekennzeichnet, daß ein Umschalter (71) zur Umschaltung der Energieversorgung der Lagesensoren (33, 34) in zeitlicher Folge vorgesehen ist.

10. Vorrichtung nach Anspruch 1, dadurch gekennzeichnet, daß zum Antreiben des bewegbaren Teils ein Elektromotor (14) vorgesehen ist und daß eine Energieversorgung der Sensoranordnung (15) sowohl über die Signalleitung (18) als auch über wenigstens eine zum Elektromotor (14) führende Verbindungsleitung (16, 17) vorgenommen ist.

11. Vorrichtung nach Anspruch 1, dadurch gekennzeichnet, daß zum Antreiben des bewegbaren Teils ein Elektromotor (14) vorgesehen ist und daß eine Energieversorgung der Sensoranordnung (15) über zwei zum Elektromotor (14) führenden Verbindungsleitungen (16, 17) vorgenommen ist.

12. Vorrichtung nach Anspruch 1, dadurch gekennzeichnet, daß das bewegbare Teil Bestandteil eines Stellantriebs ist, der vorzugsweise in einem Kraftfahrzeug angeordnet ist.

## Claims

1. Device for detecting the movement of a movable part, having a first position sensor (33), which is operatively connected to the movable part and emits a first signal (H1) which is assigned to a first range of positions of the moving part, and having a second position sensor (34), which is operatively connected to the movable part and emits a second signal (H2) which is assigned at least to a second range of positions of the moving part, characterized in that the two ranges of positions have a region of overlap (70), in that the signals (H1, H2) emitted by the position sensors (33, 34) are forwarded to a signal-processing arrangement (29) which, from the two signals (H1, H2), determines a direction signal and a speed signal (R, G) for the moving part, in that discrete values (W1, W2) are assigned to the direction signal and to the speed signal (R, G), and in that the added discrete values (W1, W2) are passed via a signal line (18) to an evaluation arrangement (13) which, from the added discrete values (W1, W2), determines the direction, the speed or a derived variable of the movable part.

2. Device according to Claim 1, characterized in that the discrete values (W1, W2) have at least approximately the same magnitude.

3. Device according to Claim 1, characterized in that the discrete values (W1, W2) are different, one value (W1, W2) having at least approximately twice the value of the other value (W1, W2).

4. Device according to Claim 1, characterized in that elements which are sensitive to a magnetic field, preferably Hall-effect elements, are used as position sensors (33, 34).

5. Device according to Claim 1, characterized in that, for the purpose of addition, two controlled current sources (27, 28) are provided which each impress a predetermined current on the signal line (18).

6. Device according to Claim 5, characterized in that a current mirror circuit (42) is contained in an evaluation arrangement (13) connected to the signal line (18).

7. Device according to Claim 5, characterized in that a circuit (43) for increasing the voltage on the signal line (18) is provided in an evaluation arrangement (13) connected to the signal line (18).

8. Device according to Claim 4, characterized in that the Hall-effect elements (33, 34), the signal-processing arrangement (29), and the current sources (37, 38) are contained in an integrated circuit.

9. Device according to Claim 1, characterized in that a changeover switch (71) is provided for changing over the power supply of the position sensors (33, 34) in chronological succession.

10. Device according to Claim 1, characterized in that an electric motor (14) is provided for driving the movable part, and in that power is supplied to the sensor arrangement (15) both via the signal line (18) and via at least one connecting line (16, 17) leading to the electric motor (14).

11. Device according to Claim 1, characterized in that an electric motor (14) is provided for driving the movable part, and in that power is supplied to the sensor arrangement (15) via two connecting lines (16, 17) leading to the electric motor (14).

12. Device according to Claim 1, characterized in that the movable part is a component part of an actuating drive which is preferably arranged in a motor vehicle.

## Revendications

1. Dispositif de détection du mouvement d'une pièce mobile qui comprend un premier détecteur de position (33) en liaison opérationnelle avec la pièce mobile et qui délivre un premier signal (41) associé à une première zone de position de la pièce mobile, et qui comprend un second détecteur de position (34) en liaison opérationnelle avec la pièce mobile et qui délivre un second signal (42) associé au moins à une seconde zone de position de la pièce mobile,
caractérisé en ce que
- les deux zones de position présentent une zone de recouvrement (70),
- les signaux (H1, H2) délivrés par les détecteurs de position (33, 34) sont envoyés à un agencement (29) de retraitement de signaux qui détecte, à partir des deux signaux (H1, H2) pour la pièce mobile, un signal de direction et un signal de vitesse (R, G),
- l'on associe au signal de direction et au signal de vitesse (R, G) des valeurs discrètes (W1, W2) et
- les valeurs discrètes (W1, W2) additionnées sont amenées, par l'intermédiaire d'une ligne de signaux (18), à un agencement d'exploitation (13) qui détermine, à partir des valeurs discrètes additionnées (W1, W2), la direction, la vitesse ou une grandeur dérivée de la pièce mobile.

2. Dispositif selon la revendication 1,
caractérisé en ce que
les valeurs discrètes (W1, W2) ont la même grandeur au moins de façon approchée.

3. Dispositif selon la revendication 1,
caractérisé en ce que
les valeurs discrètes (W1, W2) sont différentes, une valeur (W1, W2) présentant par rapport à l'autre valeur (W1, W2) la valeur double, au moins de façon approchée.

4. Dispositif selon la revendication 1,
caractérisé en ce que
l'on utilise comme détecteurs de position (33, 34) des éléments sensibles aux champs magnétiques, de préférence des éléments à effet Hall.

5. Dispositif selon la revendication 1,
caractérisé en ce que
pour l'addition, on prévoit deux sources d'intensité (27, 28) commandées qui introduisent respectivement une intensité prédéfinie sur la ligne de signaux (18).

6. Dispositif selon la revendication 5,
caractérisé en ce que
dans un agencement d'exploitation (13), relié à la ligne de signaux (18), est contenu un circuit de courant renversé (42).

7. Dispositif selon la revendication 5,
caractérisé en ce que
dans un agencement d'exploitation (13), relié à la ligne de signaux (18), est prévu un circuit (43) servant à augmenter la tension sur la ligne de signaux (18).

8. Dispositif selon la revendication 4,
caractérisé en ce que
les éléments à effet Hall (33, 34), l'agencement de retraitement de signaux (29) et les sources d'intensité (37, 38) sont contenus dans un circuit intégré.

9. Dispositif selon la revendication 1,
caractérisé en ce que
l'on prévoit un convertisseur (71) pour convertir l'alimentation en énergie des détecteurs de position (33, 34) en une suite temporelle.

10. Dispositif selon la revendication 1,
caractérisé en ce que
- pour entraîner la pièce mobile on prévoit un moteur électrique (14), et
- une alimentation en énergie de l'agencement de détection (15) est réalisée par l'intermédiaire de la ligne de liaison (18) comme aussi par l'intermédiaire d'au moins une ligne de liaison (16, 17) menant au moteur électrique (14).

11. Dispositif selon la revendication 1,
caractérisé en ce que
- pour entraîner la pièce mobile on prévoit un moteur électrique (14) et
- une alimentation en énergie de l'agencement de détection (15) est réalisée par l'intermédiaire de deux lignes de liaison (16, 17) allant au moteur électrique (14).

12. Dispositif selon la revendication 1,
caractérisé en ce que
la pièce mobile est une pièce constitutive d'un mécanisme de commande qui est de préférence disposé dans un véhicule à moteur.
